(19) Europäisches Patentamt

European Patent Office

Office européen des brevets

(11) **EP 4 708 538 A1**

(12) **EUROPEAN PATENT APPLICATION**

(43) Date of publication:
**11.03.2026 Bulletin 2026/11**

(21) Application number: **25197970.4**

(22) Date of filing: **25.08.2025**

(51) International Patent Classification (IPC):
*H01M 50/414* (2021.01)     *H01M 50/417* (2021.01)
*H01M 50/457* (2021.01)     *H01M 50/489* (2021.01)
*H01M 50/491* (2021.01)     *H01M 10/0525* (2010.01)

(52) Cooperative Patent Classification (CPC):
**H01M 50/417; H01M 10/0525; H01M 50/414;
H01M 50/457; H01M 50/489; H01M 50/491;**
Y02E 60/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **26.08.2024 CN 202411171725**

(71) Applicant: **NINGDE AMPEREX TECHNOLOGY
LIMITED**
**Ningde City, Fujian Province 352100 (CN)**

(72) Inventors:
• **WEN, Xiaodong**
  **Ningde City, Fujian Province, 352100 (CN)**
• **WEI, Zengbin**
  **Ningde City, Fujian Province, 352100 (CN)**
• **FENG, Bo**
  **Ningde City, Fujian Province, 352100 (CN)**

(74) Representative: **Icosa**
  **83 avenue Denfert-Rochereau**
  **75014 Paris (FR)**

(54) **SEPARATOR, SECONDARY BATTERY, AND ELECTRONIC DEVICE**

(57) A separator includes a base film and a first coating disposed on a surface of the base film to face one side of a positive electrode. The first coating includes an organic cyanide with a first functional group. The first functional group includes at least one of a cyano group, an isocyano group, an isocyanate group, or a melamine compound. The first functional group of the first coating has a molar concentration of M fmol/$\mu$m$^3$, where $0.1 \leq M \leq 30$. The secondary battery provided by this application has a high energy density and also has good thermal safety, high-temperature cycle performance and high-temperature storage performance.

EP 4 708 538 A1

## Description

### TECHNICAL FIELD

This application relates to the technical field of energy storage, and in particular, to a separator, a secondary battery, and an electronic device.

### BACKGROUND

With the popularization and application of intelligent products, people's demand for electronic products such as mobile phones, notebook computers and cameras is increasing year by year. Secondary batteries have the advantages such as a long life, low self-discharge, no memory effect, and environmental friendliness, and thus have become the most valued novel energy storage batteries at present. However, with the advancement of technology and the continuous improvement of living standards, people's requirements for the energy density of the secondary batteries are also constantly increasing.

However, high-energy density secondary batteries are prone to the problem of high-temperature performance deterioration. Therefore, there is an urgent need to provide a high-energy density secondary battery with good high-temperature performance.

### SUMMARY

In view of this, the embodiments of this application provide a separator, a secondary battery, and an electronic device, which have good high-temperature performance on the basis of having a high energy density.

In a first aspect, an embodiment of this application provides a separator. The separator includes a base film and a first coating disposed on a surface of the base film to face one side of a positive electrode plate. The first coating includes an organic cyanide with a first functional group. The first functional group includes at least one of a cyano group, an isocyano group, an isocyanate group, or a melamine derivative. Based on the volume of the first coating, the first functional group has a molar concentration of M $fmol/\mu m^3$, $0.1 \leq M \leq 30$.

On the basis of the separator according to the embodiment of this application, the applicant finds that with the increase of a charging voltage of a high-energy density secondary battery, oxygen atoms of a positive electrode lithium layer lose obstructions therebetween and repulse each other, leading to continuous delithiation, which makes a surface lattice undergo gas overflow, and a surface structure of a positive electrode lithium cobalt oxide material steadily descends, and irreversible structural phase transition gradually occurs, thereby causing a decline in safety performance. The surface of the positive electrode side of the separator is coated with the organic cyanide at a specific concentration. The organic cyanide diffuses and comes into contact with the surface of a positive electrode material, which can stabilize metal atoms and positive electrode crystal structures, reduce release of active oxygen, and restrain structural phase transition causing electrochemical performance deterioration of materials such as lithium cobalt oxide during the process of high-voltage charging and discharging, thereby improving the stability of a positive electrode, and in turn, improving the thermal safety and high-temperature cycle performance of the secondary battery.

In some embodiments, the above separator satisfies the following condition: $1 \leq M \leq 10$. On the basis of the above embodiment, in the separator according to the embodiment of this application, by adjusting and controlling the molar concentration of M $fmol/\mu m^3$ of the first functional group within the above range, the thermal safety and high-temperature cycle performance of the secondary battery can be further improved.

In some embodiments, the above organic cyanide includes at least one of polyacrylonitrile, acrylonitrile-butadiene rubber, 1,3,5-triazine-2,4,6-triamine, melamine cyanurate, or melamine trithiocyanurate. On the basis of the above embodiment, in the separator according to the embodiment of this application, by selecting the above organic cyanide, the amount of dissolved organic cyanide is maintained within a specific range, which can better stabilize the metal atoms and crystal structures on the surface of the positive electrode material and restrain the structural phase transition of the positive electrode material, thereby further improving the stability of the positive electrode, and in turn, further improving the thermal safety and high-temperature cycle performance of the secondary battery.

In some embodiments, the above first coating includes nitrogen and carbon. Based on the mass of the first coating, a mass percent of nitrogen is J%, and a mass percent of carbon is K%, where $0.3 \leq J/K \leq 2.2$; and/or, $10.5 \leq J \leq 55$. On the basis of the above embodiment, in the separator according to the embodiment of this application, by controlling the ratio of the mass percent J% of nitrogen in the first coating to the mass percent K% of carbon within the above range, the content of each element, especially nitrogen, in the first coating is within an appropriate range. In this case, it is more conducive to further improving the thermal safety and high-temperature cycle performance of the secondary battery and also improving high-temperature storage performance.

In some embodiments, the above first coating satisfies at least one of the following conditions: (1) $0.7 \leq J/K \leq 1.8$;

(2) $15 \leq J \leq 55$; or (3) $20 \leq K \leq 65$. Based on the above embodiment, in the separator according to the embodiment of this application, by further controlling the mass percent $J\%$ of nitrogen in the first coating, the mass percent $K\%$ of carbon, and the ratio thereof within the above preferred range, the thermal safety and high-temperature cycle performance of the secondary battery can be further improved, and the high-temperature storage performance is also improved.

In some embodiments, a material of the above base film is at least one selected from polyethylene or polypropylene; and/or, a pore closing temperature of the above separator is 120 °C to 140 °C; and/or, the above first coating further includes a binder. The binder includes at least one of polyacrylic acid, polyacrylate, lithium polyacrylate, polyvinylidene fluoride, styrene-butadiene rubber, polyacrylamide, or sodium carboxymethyl cellulose. On the basis of the above embodiment, in the separator according to the embodiment of this application, by selecting the above polyolefin as the material of the base film, pores can be closed at an appropriate temperature to obstruct interaction between positive and negative electrodes. By selecting the above binder, the surface of the base film can be uniformly coated with the first coating, thereby further improving the thermal safety and high-temperature cycle performance of the secondary battery and also improving the high-temperature storage performance.

In some embodiments, the above separator further includes a bonding layer. The bonding layer is located between the first coating and the positive electrode plate, and a thickness of the bonding layer is $H\ \mu\text{m}$, where $0.1 \leq H \leq 3$. On the basis of the above embodiment, in the separator according to the embodiment of this application, by disposing the bonding layer between the first coating and the positive electrode plate and controlling the thickness of the bonding layer within the above range, battery cells can be bonded to form an entirety. An appropriate amount of electrolyte solution is stored between the separator and the positive electrode, such that the organic cyanide in the first coating better diffuses to the surface of the positive electrode material, thereby further improving the thermal safety and high-temperature cycle performance of the secondary battery and also improving the high-temperature storage performance.

In some embodiments, in the above bonding layer, $0.2 \leq H \leq 2$; and/or, a material of the bonding layer includes at least one of styrene-butadiene rubber, polyacrylic acid, polyacrylate, lithium polyacrylate, polymethyl methacrylate, polyacrylonitrile, or polyvinylidene difluoride. On the basis of the above embodiment, in the separator according to the embodiment of this application, by further adjusting and controlling the thickness of the above bonding layer within the above preferred range, an appropriate amount of electrolyte solution can be stored between the separator and the positive electrode, and meanwhile, the first coating comes into contact with the positive electrode plate, such that the organic cyanide in the first coating better diffuses to the surface of the positive electrode material. By selecting the above binder, swelling resistance performance of the electrolyte solution remains good, which can maintain bonding between the first coating and the positive electrode, thereby further improving the thermal safety and high-temperature cycle performance of the secondary battery and also improving the high-temperature storage performance.

In a second aspect, an embodiment of this application provides a secondary battery, including a positive electrode plate, an electrolyte solution, and the above separator. The positive electrode plate includes a positive current collector and a positive electrode material layer disposed on at least one surface of the positive current collector. The positive electrode material layer includes a positive active material, a delithiation capacity of the positive active material is P, where $0.5 \leq P \leq 0.9$. On the basis of the above embodiment, in the secondary battery according to the embodiment of this application, when the delithiation capacity P of the positive active material is within the above range, the organic cyanide in the first coating can better diffuse into the surface of the positive electrode material, thereby improving the thermal safety and high-temperature cycle performance of the secondary battery.

In some embodiments, in the above positive active material, $0.6 \leq P \leq 0.8$. On the basis of the above embodiment, in the secondary battery according to the embodiment of this application, when the delithiation capacity P of the positive active material is within the above preferred range, the organic cyanide in the first coating can better diffuse into the surface of the positive electrode material, thereby further improving the thermal safety and high-temperature cycle performance of the secondary battery.

In some embodiments, the positive active material of the above secondary battery includes at least one of lithium cobalt oxide, a ternary positive electrode material, lithium iron phosphate, or a lithium-rich manganese based material. On the basis of the above embodiment, in the secondary battery according to the embodiment of this application, by selecting the above positive active material, the positive electrode has a high delithiation capacity, the battery cells have a high energy density, and meanwhile, the organic cyanide in the first coating diffuses to the surface of the above positive electrode material, which can better improve the stability of the positive electrode, thereby further improving the thermal safety and high-temperature cycle performance of the secondary battery.

In some embodiments, the above electrolyte solution includes fluoroethylene carbonate. Based on a total mass of the electrolyte solution, a mass percent of fluoroethylene carbonate is $N\%$, where $2 \leq N \leq 12$. On the basis of the above embodiment, in the secondary battery according to the embodiment of this application, the electrolyte solution containing the above content of fluoroethylene carbonate can help the negative electrode to form a stable SEI film to synergistically play a role in improving the stability of the positive electrode and negative electrode together with the organic cyanide, such that the battery cells have stable positive electrode and negative electrode at a high temperature, and heat produced by a battery cell entirety is reduced, thereby further improving the thermal safety and high-temperature cycle performance of the secondary battery.

In a third aspect, an embodiment of this application provides an electronic device, including the above secondary battery.

## DETAILED DESCRIPTION

To make the objectives, technical solutions, and advantages of this application clearer, the following describes this application in further detail with reference to drawings and embodiments. Understandably, the specific embodiments described herein are merely intended to explain this application, but are not intended to limit this application.

An embodiment of this application provides a secondary battery, including a separator, an electrolyte solution, a positive electrode plate, and a negative electrode plate.

Separator

According to this application, the separator is usually disposed between the positive electrode plate and the negative electrode plate. The separator is configured to separate the positive electrode plate from the negative electrode plate, prevent a short circuit inside the secondary battery, and allow electrolyte ions to pass freely without affecting the charging and discharging processes of the battery.

In some embodiments, the separator includes a base film and a first coating disposed on a surface of the base film to face one side of a positive electrode. The first coating includes an organic cyanide with a first functional group. The first functional group includes at least one of a cyano group (-C≡N), an isocyano group (-N≡C), an isocyanate group (-N=C=O), or a melamine derivative. Based on the volume of the first coating, the first functional group has a molar concentration of M fmol/$\mu$m$^3$, $0.1 \leq M \leq 30$, preferably, $1 \leq M \leq 10$. For example, the value of M of the molar concentration of the first functional group may be 0.1, 0.5, 1, 5, 10, 15, 20, 30, or a value falling within a range formed by any two thereof. According to this application, by adjusting and controlling the value of M of the molar concentration of the first functional group in the separator within the above range, the thermal safety and high-temperature storage performance of the secondary battery can be improved.

In some embodiments, the organic cyanide includes at least one of polyacrylonitrile, acrylonitrile-butadiene rubber, 1,3,5-triazine-2,4,6-triamine, melamine cyanurate, or melamine trithiocyanurate. According to this application, by selecting the above organic cyanide, the thermal safety and high-temperature storage performance of the secondary battery can be further improved.

In some embodiments, the first coating on the separator includes nitrogen and carbon. Based on the mass of the first coating, a mass percent of nitrogen is J%, where $10.5 \leq J \leq 55$, preferably, $15 \leq J \leq 55$. For example, the value of J may be 10.5, 15, 31, 46, 55, or a value falling within a range formed by any two thereof. A mass percent of carbon is K%, where $20 \leq K \leq 65$. For example, the value of K may be 20, 29, 35, 47, 51, 53, 60, 65, or a value falling within a range formed by any two thereof. Where $0.3 \leq J/K \leq 2.2$, preferably, $0.7 \leq J/K \leq 1.8$. For example, the ratio of J to K may be 0.3, 0.5, 0.8, 1.2, 1.8, 2.2, or a value falling within a range formed by any two thereof. According to this application, by controlling the mass percent J% of nitrogen in the first coating, the mass percent K% of carbon, and the ratio thereof within the above range, the thermal safety and high-temperature cycle performance of the secondary battery can be further improved, and the high-temperature storage performance is also improved.

In some embodiments, a material of the base film is at least one selected from polyethylene or polypropylene. According to this application, by selecting the above polyolefin as the material of the base film, the thermal safety and high-temperature cycle performance of the secondary battery can be further improved, and the high-temperature storage performance is also improved.

In some embodiments, a pore closing temperature of the separator is 120 °C to 140 °C. For example, the value of the pore closing temperature of the separator may be 120, 123, 126, 132, 133, 135, 140, or a value falling within a range formed by any two thereof. According to this application, the pore closing temperature of the separator being within the above range can further improve the thermal safety and high-temperature cycle performance of the secondary battery, and the high-temperature storage performance is also improved.

In some embodiments, the first coating on the separator further includes a binder. The binder includes at least one of polyacrylic acid, polyacrylate, lithium polyacrylate, polyvinylidene fluoride, styrene-butadiene rubber, polyacrylamide, or sodium carboxymethyl cellulose. According to this application, by selecting the above binder, the thermal safety and high-temperature cycle performance of the secondary battery are further improved, and the high-temperature storage performance is also improved.

In some embodiments, the separator further includes a bonding layer. The bonding layer is located between the first coating and the positive electrode plate, and a thickness of the bonding layer is H $\mu$m, where $0.1 \leq H \leq 3$, preferably, $0.2 \leq H \leq 2$. For example, the value of H may be 0.1, 0.2, 0.5, 1.0, 1.5, 2.0, 2.5, 3, or a value falling within a range formed by any two thereof. According to this application, the value of the thickness of the bonding layer being within the above range can further improve the thermal safety and high-temperature cycle performance of the secondary battery, and the high-temperature storage performance is also improved.

In some embodiments, a material of the bonding layer includes at least one of styrene-butadiene rubber, polyacrylic acid, polyacrylate, lithium polyacrylate, polymethyl methacrylate, polyacrylonitrile, or polyvinylidene difluoride. According to this application, by selecting the above material of the bonding layer, the thermal safety and high-temperature cycle performance of the secondary battery can be further improved, and the high-temperature storage performance is also improved.

In this application, a pore size of the separator is 0.01 $\mu$m to 1 $\mu$m and a thickness of the separator is 5 $\mu$m to 50 $\mu$m. In some embodiments, the thickness of the separator is greater than 1 $\mu$m, or greater than 5 $\mu$m, or greater than 8 $\mu$m. In some embodiments, the thickness of the separator is less than 50 $\mu$m, or less than 40 $\mu$m, or less than 30 $\mu$m. When the thickness of the separator is within the above range, the insulativity and the mechanical strength can be ensured, and the rate characteristic and energy density of the secondary battery can also be ensured.

Electrolyte solution

An electrolyte solution used in the secondary battery according to the embodiment of this application is a non-aqueous electrolyte solution. The non-aqueous electrolyte solution includes an electrolyte and a solvent for dissolving the electrolyte.

In some embodiments, the non-aqueous electrolyte solution in this application includes fluoroethylene carbonate. Based on a total mass of the electrolyte solution, a mass percent of the fluoroethylene carbonate is N%, where $2 \leq N \leq 12$. For example, N is 2, 3.1, 4.2, 5.4, 6.8, 7.2, 10.5, 12, or a value falling within a range formed by any two thereof.

The electrolyte solution may further include a lithium salt and a non-aqueous solvent. The type of the lithium salt is not particularly limited in this application, as long as the objectives of this application can be achieved. For example, the lithium salt may include, but is not limited to, at least one of lithium hexafluorophosphate ($LiPF_6$), lithium tetrafluoroborate ($LiBF_4$), lithium difluorophosphate ($LiPO_2F_2$), lithium bistrifluoromethanesulfonimide (LiTFSI), lithium bis(fluorosulfonyl) imide (LiFSI), lithium bis(oxalate) borate (LiBOB), or lithium difluoro(oxalato)borate (LiDFOB). Based on the mass of the electrolyte solution, the mass percent of the lithium salt may be 8% to 15%. For example, the mass percent of the lithium salt may be 8%, 9%, 10%, 11%, 12.5%, 13%, 15%, or a value falling within a range formed by any two thereof. The type of the above non-aqueous solvent is not particularly limited in this application, as long as the objectives of this application can be achieved. For example, the non-aqueous solvent may include, but is not limited to, at least one of a carbonate compound, a carboxylate compound, an ether compound, or other organic solvents. The carbonate compound may include, but is not limited to, at least one of a chain carbonate compound or a cyclic carbonate compound. The chain carbonate compound may include, but is not limited to, at least one of dimethyl carbonate, diethyl carbonate, dipropyl carbonate, methyl propyl carbonate, ethylene propylene carbonate, or ethyl methyl carbonate. The cyclic carbonate compound may include, but is not limited to, at least one of ethylene carbonate, propylene carbonate, butyl carbonate, or vinyl ethylene carbonate.

The carboxylate compound may include, but is not limited to, at least one of methyl formate, methyl acetate, ethyl acetate, n-propyl acetate, tert-butyl acetate, methyl propionate, ethyl propionate, propyl propionate, $\gamma$-butyrolactone, decalactone, valerolactone, or caprolactone. The ether compound may include, but is not limited to, at least one of ethylene glycol dimethyl ether, dibutyl ether, tetraglyme, diglyme, 1,2-dimethoxyethane, 1,2-diethoxyethane, 1-ethoxy-1-methoxyethane, 2-methyltetrahydrofuran, or tetrahydrofuran. The other organic solvent may include, but is not limited to, at least one of dimethyl sulfoxide, 1,2-dioxolane, sulfolane, methyl sulfolane, 1,3-dimethyl-2-imidazolidinone, N-methyl-2-pyrrolidone, dimethylformamide, acetonitrile, trimethyl phosphate, triethyl phosphate, or trioctyl phosphate.

Positive electrode plate

The positive electrode plate includes a positive current collector and a positive electrode material layer disposed on at least one surface of the positive current collector. The positive electrode material layer includes a positive active material, a delithiation capacity of the positive active material is P, where $0.5 \leq P \leq 0.9$. Preferably, $0.6 \leq P \leq 0.8$. For example, P is 0.5, 0.6, 0.7, 0.8, 0.9, or a value falling within a range formed by any two thereof.

In some embodiments, the positive active material includes at least one of lithium cobalt oxide, a ternary positive electrode material, lithium iron phosphate, or a lithium-rich manganese based material. For example, the positive active material may be at least one of lithium cobalt oxide, lithium nickel cobalt manganese oxide NCM811, lithium nickel cobalt manganese oxide NCM523, lithium nickel cobalt manganese oxide NCM333, lithium iron phosphate, LiMnO-LiCoO, $Li_2MnO \cdot LiNiCoO$, or $xLiMnO \cdot (1-x)LiNi.Mn.O$.

In some embodiments, the positive electrode material layer includes a positive electrode conductive material. The type of the positive electrode conductive material is not limited, and any known conductive material may be used. Examples of the positive electrode conductive material may include, but are not limited to, carbon black such as acetylene black, Super-P; materials such as amorphous carbon including needle coke; carbon nanotubes; and graphene, etc. The positive electrode conductive material may be used alone or in any combination.

In some embodiments, the positive electrode material layer includes a positive electrode binder. The type of the positive electrode binder is not particularly limited, as long as it is a material that is dissoluble or dispersible in a liquid medium used in the manufacture of electrodes. Examples of the positive electrode binder may include, but are not limited to, one or more of the followings: resin-based polymers such as polyethylene, polypropylene, polyethylene terephthalate, polymethyl methacrylate, polyimide, aromatic polyamide, cellulose, or nitrocellulose; rubber-like polymers such as styrene-butadiene rubber, acrylonitrile-butadiene rubber, fluororubber, isoprene rubber, butadiene rubber, or ethylene-propylene rubber; thermoplastic elastomer-like polymers such as a styrene-butadiene-styrene block copolymer or a hydride thereof, an ethylene-propylene-diene terpolymer, a styrene-ethylene-butadiene-ethylene copolymer, or a styrene-isoprene-styrene block copolymer or a hydride thereof; soft resin-like polymers such as syndiotactic 1,2-polybutadiene, polyvinyl acetate, an ethylene-vinyl acetate copolymer, or a propylene-$\alpha$-olefin copolymer; fluorine-based polymers such as polyvinylidene difluoride, polytetrafluoroethylene, fluorinated polyvinylidene difluoride, or a polytetrafluoroethylene-ethylene copolymer; and polymer compositions with the ion conductivity of alkali metal ions. The positive electrode binder may be used alone or in any combination.

The type of a solvent for forming a positive electrode slurry is not limited, as long as the solvent can dissolve or disperse a positive active material, a conductive material, a positive electrode binder, and a thickener used as needed. Examples of the solvent for forming the positive electrode slurry may include any one of aqueous solvents and organic solvents. Examples of aqueous media may include, but are not limited to, mixed media composed of alcohol and water, or water, or the like. Examples of organic media may include, but are not limited to, aliphatic hydrocarbons such as hexane; aromatic hydrocarbons such as benzene, toluene, xylene, and methylnaphthalene; heterocyclic compounds such as quinoline and pyridine; ketones such as acetone, methyl ethyl ketone, and cyclohexanone; esters such as methyl acetate and methyl acrylate; amines such as diethylenetriamine and N,N-dimethylaminopropylamine; ethers such as diethyl ether, propylene oxide, and tetrahydrofuran; amides such as N-methyl-pyrrolidone, dimethylformamide, and dimethylacetamide; and non-protonic polar solvents such as hexamethylphosphoramide and dimethyl sulfoxide.

The thickener is usually used to adjust the viscosity of the slurry. In the case of using the aqueous media, the thickener and styrene-butadiene rubber latex may be used for slurring. The type of the thickener is not particularly limited. Examples of the thickener may include, but are not limited to, carboxymethylcellulose, methylcellulose, hydroxymethyl cellulose, ethyl cellulose, polyvinyl alcohol, oxidized starch, phosphorylated starch, casein, and salts thereof, or the like. The thickener may be used alone or in any combination.

The type of the positive current collector is not particularly limited, and the positive current collector may be any material known to be suitable for use as the positive current collector. Examples of the positive current collector may include, but are not limited to, metal materials such as aluminum, stainless steel, nickel plating, titanium, and tantalum; and materials such as a carbon cloth and a carbon paper. In some embodiments, the positive current collector is a metal material. In some embodiments, the positive current collector is aluminum.

In order to reduce the electronic contact resistance between the positive current collector and the positive electrode material layer, the surface of the positive current collector may include a conductive auxiliary or a conductive coating. Examples of the conductive auxiliary may include, but are not limited to, carbon and noble metals such as gold, platinum, and silver. Examples of the conductive coating may include a mixture layer containing an inorganic oxide, a conductive agent, and a binder.

Negative electrode plate

The negative electrode plate includes a negative current collector and a negative electrode material layer disposed on at least one surface of the negative current collector. The negative electrode material layer includes a negative active material. In some embodiments, the rechargeable capacity of the negative active material is greater than the discharge capacity of the positive active material to prevent unintentional precipitation of lithium metal on the negative electrode during charging.

The negative active material may include at least one of natural graphite, artificial graphite, mesocarbon microbeads (MCMB), silicon, a silicon-carbon complex, SiOx (0.5 < x < 1.6), Li-Sn alloy, Li-Sn-O alloy, Sn, SnO, SnO$_2$, lithium titanate Li$_4$Ti$_5$O$_{12}$ of a spinel structure, Li-Al alloy, metallic lithium, or the like. Optionally, the negative active material may further include an amorphous carbon material. The amorphous carbon material may be soft carbon, that is, low-temperature calcined coke, hard carbon, mesophase pitch carbide, calcined coke, or the like.

The negative electrode material layer in this application further includes a negative electrode binder. The negative electrode binder can improve binding among negative active material particles and binding between the negative active material and current collector. The type of negative electrode binder is not particularly limited, as long as it is a material that is stable for the electrolyte solution or the solvent used in the manufacture of the electrode. In some embodiments, the negative electrode binder includes a resin binder. Examples of the resin binder include, but are not limited to, fluororesin, polyacrylonitrile (PAN), polyimide resin, acrylic resin, polyolefin resin, etc. When an aqueous solvent is used to prepare a negative electrode mixture slurry, the negative electrode binder includes, but is not limited to, carboxymethylcellulose (CMC) or a salt thereof, styrene-butadiene rubber (SBR), polyacrylic acid (PAA) or a salt thereof, polyvinyl alcohol, or the like.

The negative electrode material layer in this application further includes a conductive agent. The negative electrode conductive agent is not particularly limited in this application, as long as the objectives of this application can be achieved. For example, the negative electrode conductive agent may be at least one of acetylene black, Ketjen black, carbon nanotubes, carbon fibers, carbon dots, graphene, or the like. The nanotubes include at least one of single-walled carbon nanotubes or multi-walled carbon nanotubes.

The negative current collector is not particularly limited herein, as long as the objectives of this application can be achieved. For example, the negative current collector may include a copper foil, an aluminum foil, a nickel foil, a stainless steel foil, a titanium foil, foamed nickel, foamed copper, a conductive-metal-clad polymer substrate, or the like. The conductive metal includes, but is not limited to, copper, nickel, or titanium. The material of the polymer substrate includes, but is not limited to, at least one of polyethylene, polypropylene, poly(ethylene-co-propylene), polyethylene terephthalate, polyethylene naphthalate, or poly(p-phenylene terephthalamide). The thicknesses of the negative current collector and the negative electrode material layer are not particularly limited herein, as long as the objectives of this application can be achieved. For example, the thickness of the negative current collector is 4 $\mu$m to 12 $\mu$m, and the thickness of the negative electrode material layer on a single side is 30 $\mu$m to 160 $\mu$m. In this application, a negative electrode mixture layer may be disposed on one surface of the negative current collector in a thickness direction of the negative current collector or on both surfaces of the negative electrode current collector in the thickness direction of the negative current collector. It is hereby noted that the "surface" here may be the entire region of the negative current collector, or a partial region of the negative current collector, without being particularly limited in this application, as long as the objectives of this application can be achieved.

A compaction density of the negative electrode plate is not particularly limited in this application, as long as the objectives of this application can be achieved. For example, the compaction density of the negative electrode plate may be 1.0 g/cm$^3$ to 1.85 g/cm$^3$. The cold pressing pressure of the negative electrode plate is not particularly limited in this application, as long as the objectives of this application can be achieved. For example, the cold pressing pressure of the negative electrode plate may be 3 tons to 30 tons.

Optionally, the negative electrode plate may further include a conductive layer. The conductive layer is located between the negative current collector and the negative electrode material layer. The constituents of the conductive layer are not particularly limited in this application, and the conductive layer may be a conductive layer commonly used in the art. The conductive layer includes a conductive agent and a binder. The conductive agent and the binder in the conductive layer are not particularly limited in this application, and the conductive layer may be at least one of the conductive agent or the binder. The mass ratio of the conductive agent to the binder in the conductive layer are not particularly limited in this application, and may be selected by a person skilled in the art as actually required, as long as the objectives of this application can be achieved. The thickness of the conductive layer is not particularly limited in this application, as long as the objectives of this application can be achieved. For example, the thickness of the conductive layer is 1 $\mu$m to 10 $\mu$m.

The secondary battery of this application further includes a packaging bag. The packaging bag is configured to accommodate the positive electrode plate, the separator, the negative electrode plate, the electrolyte solution, and other components known in the art in the secondary battery. Such other components are not limited in this application. The packaging bag is not particularly limited in this application, and may be a packaging bag well known in the art, as long as the objectives of this application can be achieved.

This application further provides an electronic device, including the secondary battery according to the embodiment of this application. The electronic device includes, but is not limited to, a notebook computer, a pen-input computer, a mobile computer, an electronic book player, a portable phone, a portable fax machine, a portable copier, a portable printer, a stereo headset, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, an electric tool, a flash light, a camera, a large household storage battery, a lithium-ion capacitor, and the like.

Embodiment

Taking a lithium-ion battery as an example, the implementations of the secondary battery in this application are described below in more detail with reference to embodiments and comparative embodiments. A preparation method described in this application is only an example, and any other suitable preparation methods are within the scope of this application. In addition, unless otherwise specified, the word "parts" means parts by mass, and the symbol "%" means a percentage by mass.

Embodiment 1-1

<Preparing a lithium-ion battery>

Preparing a positive electrode: Mixing lithium cobalt oxide as a positive active material, conductive carbon black as a conductive agent, and polyvinylidene difluoride (PVDF) at a mass ratio of 95: 2: 3, adding N-methyl-pyrrolidone (NMP), and stirring the mixture well with a vacuum mixer to obtain a positive electrode slurry in which the solid content is 70 wt%. Uniformly coating one surface of a 9-$\mu$m thick positive current collector aluminum foil with the positive electrode slurry, and drying the slurry to obtain a positive electrode plate coated with a positive electrode mixture layer on a single side thereof. Repeating the above steps on the other surface of the positive current collector aluminum foil to obtain a positive electrode plate coated with positive electrode mixture layers on both sides thereof. Performing cold calendering, cutting, slitting, and drying to obtain a positive electrode plate of 74 mm $\times$ 867 mm in size.

Preparing a non-aqueous electrolyte solution: In a dry argon atmosphere glove box, mixing ethylene carbonate (EC), propylene carbonate (PC), and diethyl carbonate (DEC) according to a mass ratio of 1: 3: 6 as a basic solvent, and then dissolving fluoroethylene carbonate and $LiPF_6$ in the above basic solvent to obtain an electrolyte solution. Based on a total mass of the electrolyte solution, a mass percent of LiPF6 is 12.5%, and a mass percent of fluoroethylene carbonate is 5%.

Preparing a negative electrode: using artificial graphite as a negative active material, mixing the negative active material, styrene-butadiene rubber (SBR), polyacrylic acid (PAA), carbon nanotubes (CNT), and carboxymethylcellulose (CMC) at a mass ratio of 95.8: 2.4: 0.5: 0.5: 0.8, and then adding deionized water as a solvent, and stirring well to formulate a negative electrode slurry in which the solid content is 45 wt%. Uniformly coating one surface of a 6-$\mu$m thick negative current collector copper foil with the negative electrode slurry, and drying the slurry to obtain a negative electrode plate coated with a negative electrode mixture layer on a single side thereof. Repeating the above steps on the other surface of the negative current collector copper foil to obtain a negative electrode plate coated with negative electrode mixture layers on both sides thereof. Performing cold calendering, cutting, slitting, and drying to obtain a negative electrode plate of 76.6 mm $\times$ 875 mm in size.

Preparing a separator:

Preparing an organic cyanide layer slurry: grinding polyacrylonitrile $(C_3H_3N)_n$, then mixing the polyacrylonitrile $(C_3H_3N)_n$, styrene-butadiene rubber as a binder, and lithium polyacrylate at a mass ratio of 94: 5: 1, adding deionized water or an organic solvent for dispersing and stirring for 120 min to obtain the organic cyanide coating slurry.

Uniformly coating the surface of a porous polyethylene film as the substrate layer with the organic cyanide layer slurry by using a transfer coating method, drying the same in an oven to remove moisture, and then coating a surface of an organic cyanide layer with the bonding layer, and drying to obtain a final separator, where the bonding layer is prepared by mixing the constituents of acrylate polymer particles with D90 $\leq$ 1 $\mu$m and sodium carboxymethyl cellulose at a mass ratio of 85: 15 and then adding deionized water for dispersing uniformly.

Preparing a lithium-ion battery: Stacking the positive electrode plate, the separator, and the negative electrode plate in sequence in such a way that the separator is located between the positive electrode plate and the negative electrode plate to serve a function of separation, and winding the stacked structure to obtain an bare cell. Putting the bare cell into a packaging bag, injecting the electrolyte solution, and sealing the packaging bag. Performing steps such as chemical formation, degassing, edge trimming and capacity testing to obtain a lithium-ion battery.

<Test methods>

(1) Testing thermal safety:

Putting the lithium-ion battery in a 25 °C constant-temperature environment and standing for 30 minutes to allow the lithium-ion battery to reach a constant temperature. Charging the lithium-ion battery at a constant current of 0.5 C until a potential of the delithiation capacity P is reached, and then charging the lithium-ion battery at a constant voltage until the current reaches 0.05 C. Transferring the lithium-ion battery into a hot oven, raising the temperature to 130 °C at 5 °C/min, keeping the temperature for 60 min, where the battery cell passes only if it does not catch fire or explode, testing 20 parallel samples of the lithium-ion battery, and calculating the pass rate of the thermal safety test.

Thermal safety pass rate = number of samples passing test / total number of samples $\times$ %.

(2) Testing high-temperature cycle performance:

Putting the lithium-ion battery in a 60 °C constant-temperature test box and standing for 30 minutes to allow the lithium-ion battery to reach a constant temperature. Charging the lithium-ion battery at a constant current of 0.5 C until the potential of the delithiation capacity P is reached, and charging the lithium-ion battery at a constant voltage until the current reaches 0.05 C, standing for 5 minutes, charging the lithium-ion battery at a constant current of 0.5 C until the voltage reaches 3.0 V, and recording an initial discharge capacity C0. Repeating the above steps for 100 cycles, and recording a 100th-cycle discharge capacity C1, and calculating a cycle capacity retention rate of the lithium-ion battery.

$$\text{High-temperature cycle capacity retention rate} = C1 / C0 \times 100\%.$$

(3) Testing high-temperature storage performance:

Putting the lithium-ion battery in a 25 °C constant-temperature environment and standing for 30 minutes to allow the lithium-ion battery to reach a constant temperature. Charging the lithium-ion battery at a constant current of 0.5 C until the potential of the delithiation capacity P is reached, then charging the lithium-ion battery at a constant voltage until the current reaches 0.05 C, recording the thickness of the lithium-ion battery as an initial thickness. Transferring the lithium-ion battery into a 80 °C thermostat to be stored for 42 h, during which testing and recording the thickness of the lithium-ion battery every 7 h, and recording the test thickness after 42 h as a storage thickness. Calculating the thickness expansion rate of the lithium-ion battery, and using the same as an indicator for evaluating the high-temperature storage performance of the lithium-ion battery.

High-temperature storage expansion rate = (storage thickness - initial thickness) / initial thickness $\times$ 100%.

(4) Testing delithiation capacity and full delithiation capacity

Full delithiation capacity refers to the content of lithium contained in the positive electrode when lithium returns from the negative electrode to the positive electrode after the battery cell is fully discharged. Disassembling the fully discharged battery cell and taking out the positive electrode plate, cleaning the electrolyte solution with NMP, and performing ICP element analysis to obtain the content of lithium that can be fully removed from the positive electrode.
Residual lithium content refers to the content of lithium remaining in the positive electrode after the battery cell is fully charged, at which point lithium migrates from the positive electrode to the negative electrode. Disassembling the fully charged battery cell and taking out the positive electrode plate, cleaning the electrolyte solution with NMP, and performing ICP element analysis to obtain the content of lithium that remains in the positive electrode.
After the battery cell is fully charged, delithiation capacity = (full delithiation capacity - content of lithium in positive electrode) / full delithiation capacity.

(5) Testing molar concentration of first functional group

Cleaning a separator coating with an area of S by using NMP and drying the separator coating to obtain a coating with a weight of G, grinding, uniformly mixing and pressing the coating and a potassium bromide powder together to form a tablet, with a total mass of 150 mg, and performing testing by using an infrared spectroscope (FTIR) to obtain a peak intensity I of a first functional group. Making outer standard samples with weight gradients of 0.1*G, G, 5*G and 10*G and making the outer standard samples and potassium bromide powder with a total mass of 150 mg into tablets, where dividing the weights of the outer standard samples by molecular weight M to obtain corresponding molar amounts, and performing measuring with FTIR to obtain peak intensities of first functional groups. Performing linear relationship fitting on the molar amounts of the outer standard samples and the peak intensities of the first functional groups, substituting the value I to obtain a molar amount Mg of the first functional group in the coating with the mass of G, and molar concentration = Mg / S.

(6) Testing mass percents of nitrogen and carbon

Removing the separator from the battery cell, selecting regions of the separator at the head or tail of the battery cell, or a region of the separator exceeding an anode, where the separator at such regions is not bonded to the electrode plates, and the coating is not transferred the surfaces of the electrode plates. Cleaning the separator with NMP to remove the electrolyte solution and residual lithium salts, detaching the coating from the surface of the base film, and drying the coating. Obtaining quantitative percents of carbon and nitrogen by using an elemental analyzer.
The lithium-ion battery in the following embodiments or comparative embodiments only differs from that in Embodiment 1-1 in that the type of the positive active material, the type of the organic cyanide, the delithiation capacity P of the positive active material, the molar concentration of M fmol/$\mu$m$^3$ of the first functional group in the first coating, and the mass percent N% of the fluoroethylene carbonate in the electrolyte solution are adjusted according to Table 1. The value P is adjusted by adjusting and controlling the voltage of the positive electrode. The performance test results of the lithium-ion battery in the embodiments and comparative embodiments are shown in Table 1.

Table 1

| Serial number | Positive active material | Organic cyanide | P | M | N | Thermal safety pass rate % | High-temperature cycle capacity retention rate % | Overall performance |
|---|---|---|---|---|---|---|---|---|
| Embodiment 1-1 | Lithium cobalt oxide | Polyacrylonitrile | 0.5 | 0.5 | 5 | 100 | 98.8 | 5.0 |
| Embodiment 1-2 | Lithium cobalt oxide | Polyacrylonitrile | 0.6 | 0.5 | 5 | 90 | 92.2 | 6.6 |
| Embodiment 1-3 | Lithium cobalt oxide | Polyacrylonitrile | 0.7 | 0.5 | 5 | 80 | 83.3 | 8.0 |
| Embodiment 1-4 | Lithium cobalt oxide | Polyacrylonitrile | 0.8 | 0.5 | 5 | 60 | 60.3 | 7.7 |
| Embodiment 1-5 | Lithium cobalt oxide | Polyacrylonitrile | 0.9 | 0.5 | 5 | 45 | 48.1 | 7.5 |
| Embodiment 1-6 | Lithium cobalt oxide | Polyacrylonitrile | 0.7 | 0.1 | 5 | 25 | 70.7 | 4.7 |
| Embodiment 1-7 | Lithium cobalt oxide | Polyacrylonitrile | 0.7 | 0.6 | 5 | 85 | 75.9 | 7.9 |
| Embodiment 1-8 | Lithium cobalt oxide | Polyacrylonitrile | 0.7 | 1 | 5 | 80 | 83.3 | 8.0 |
| Embodiment 1-9 | Lithium cobalt oxide | Polyacrylonitrile | 0.7 | 3 | 5 | 100 | 81.2 | 8.9 |
| Embodiment 1-10 | Lithium cobalt oxide | Polyacrylonitrile | 0.7 | 5 | 5 | 100 | 79.1 | 8.8 |
| Embodiment 1-11 | Lithium cobalt oxide | Polyacrylonitrile | 0.7 | 7 | 5 | 100 | 75.0 | 8.6 |
| Embodiment 1-12 | Lithium cobalt oxide | Polyacrylonitrile | 0.7 | 10 | 5 | 100 | 67.5 | 8.2 |
| Embodiment 1-13 | Lithium cobalt oxide | Polyacrylonitrile | 0.7 | 20 | 5 | 100 | 60.8 | 7.9 |
| Embodiment 1-14 | Lithium cobalt oxide | Polyacrylonitrile | 0.7 | 30 | 5 | 90 | 60.2 | 7.4 |
| Embodiment 1-15 | Lithium cobalt oxide | Polyacrylonitrile | 0.7 | 0.5 | 2 | 70 | 79.9 | 7.3 |
| Embodiment 1-16 | Lithium cobalt oxide | Polyacrylonitrile | 0.7 | 0.5 | 4 | 75 | 80.7 | 7.6 |
| Embodiment 1-17 | Lithium cobalt oxide | Polyacrylonitrile | 0.7 | 0.5 | 8 | 75 | 81.5 | 7.7 |
| Embodiment 1-18 | Lithium cobalt oxide | Polyacrylonitrile | 0.7 | 0.5 | 10 | 75 | 82.1 | 7.7 |

(continued)

| Serial number | Positive active material | Organic cyanide | P | M | N | Thermal safety pass rate % | High-temperature cycle capacity retention rate % | Overall performance |
|---|---|---|---|---|---|---|---|---|
| Embodiment 1-19 | Lithium cobalt oxide | Polyacrylonitrile | 0.7 | 0.5 | 12 | 80 | 81.6 | 7.9 |
| Embodiment 1-20 | Lithium cobalt oxide | Polyacrylonitrile | 0.7 | 5 | 8 | 100 | 84.6 | 9.0 |
| Embodiment 1-21 | Lithium iron phosphate | Polyacrylonitrile | 0.7 | 5 | 8 | 100 | 82.9 | 9.0 |
| Embodiment 1-22 | Lithium-rich manganese-based | Polyacrylonitrile | 0.7 | 5 | 8 | 100 | 83.5 | 9.0 |
| Embodiment 1-23 | Lithium co-balt oxide | Acrylonitrile-bu-tadiene rubber | 0.7 | 5 | 8 | 100 | 86.4 | 9.1 |
| Embodiment 1-24 | Lithium co-balt oxide | Melamine cya-nurate | 0.7 | 5 | 8 | 100 | 82.4 | 8.9 |
| Embodiment 1-25 | Lithium co-balt oxide | Melamine trithio-cyanurate | 0.7 | 5 | 8 | 100 | 83.7 | 9.0 |
| Embodiment 1-26 | Lithium cobalt oxide | 1,3,5-tria-zine-2,4,6-tria-mine | 0.7 | 5 | 8 | 100 | 84.2 | 9.0 |
| Embodiment 1-27 | Lithium cobalt oxide | Polyacrylonitrile | 0.5 | 0.5 | 5 | 90 | 96.4 | 4.7 |
| Embodiment 1-28 | Lithium cobalt oxide | Polyacrylonitrile | 0.7 | 0.5 | 14 | 60 | 75.5 | 6.6 |
| Embodiment 1-29 | Lithium cobalt oxide | Polyacrylonitrile | 0.7 | 0.5 | / | 55 | 71.0 | 6.2 |
| Comparative Embodiment 1 | Lithium cobalt oxide | Polyacrylonitrile | 0.7 | 0.05 | 5 | 0 | 51.3 | 2.5 |
| Comparative Embodiment 2 | Lithium cobalt oxide | Polyacrylonitrile | 0.7 | 35 | 5 | 40 | 8.7 | 2.4 |
| Comparative Embodiment 3 | Lithium cobalt oxide | Aluminum oxide | 0.4 | 0 | 5 | 0 | 50.4 | 0.8 |

*In the above table, P represents the delithiation capacity of the positive active material, M represents a value of molar concentration of the first functional group on the first coating, and N represents a value of the mass percent N% of fluoroethylene carbonate in the electrolyte solution. Overall performance = $P^2$ (thermal safety pass rate + high-temperature cycle capacity retention rate), where the value is taken to one decimal place, and "/" represents that the materials is not contained.

As can be seen from Table 1, in the lithium-ion battery prepared according to the embodiment of this application, the value M of the molar concentration M fmol/$\mu m^3$ of the first functional group on the first coating satisfies $0.1 \leq M \leq 30$, which can stabilize metal atoms and positive electrode crystal structures, reduce release of active oxygen, and restrain structural phase transition causing electrochemical performance deterioration of materials such as lithium cobalt oxide during the process of high-voltage charging and discharging, thereby improving the stability of the positive electrode, and in turn, improving the thermal safety and high-temperature cycle performance of the secondary battery. When $1 \leq M \leq 10$, the secondary battery can have a high energy density, and meanwhile, the thermal safety and high-temperature cycle performance of the secondary battery are further improved.

Particularly, when the value of the delithiation capacity P of the positive active material is adjusted and controlled to satisfy $0.5 \leq P \leq 0.9$, the thermal safety and high-temperature cycle performance of the secondary battery can be improved. When $0.6 \leq P \leq 0.8$, the secondary battery can have a high energy density, and meanwhile, the thermal safety and high-temperature cycle performance of the secondary battery is further improved.

Particularly, when the value of the mass percent N% of fluoroethylene carbonate in the electrolyte solution satisfies $2 \leq N \leq 12$, heat produced by a battery cell entirety is reduced, thereby further improving the thermal safety and high-temperature cycle performance of the secondary battery.

The lithium-ion battery in the following Embodiment 2-1 to Embodiment 2-32 only differs from that in Embodiment 1-24 in that when the separator is prepared, different types of materials of the base film, binders and materials of the bonding layer are selected, and the mass percent J% of nitrogen in the first coating, the mass percent K% of carbon and the thickness of H $\mu$m of the bonding layer are adjusted and controlled. When the mass percent of the nitrogen element is adjusted, the molar concentration of the first functional group is controlled unchanged.

Table 2

| Serial number | Material of base film | Pore closing temperature | Binder | Material of bonding layer | J | K | J/K | H | Thermal safety pass rate % | High-temperature cycle capacity retention rate % | High-temperature storage expansion rate % | Overall performance |
|---|---|---|---|---|---|---|---|---|---|---|---|---|
| Embodiment 1-24 | Polyethylene | 130 | Styrene-butadiene rubber | Polyacrylate | 30 | 30 | 1 | 1 | 100 | 82 | 22 | 69.0 |
| Embodiment 2-1 | Polyethylene | 130 | Styrene-butadiene rubber | Polyacrylate | 54 | 30 | 1.8 | 1 | 100 | 79 | 4 | 85.5 |
| Embodiment 2-2 | Polyethylene | 130 | Styrene-butadiene rubber | Polyacrylate | 45 | 30 | 1.5 | 1 | 100 | 82 | 7 | 84.0 |
| Embodiment 2-3 | Polyethylene | 130 | Styrene-butadiene rubber | Polyacrylate | 45.5 | 35 | 1.3 | 1 | 100 | 86 | 8 | 85.0 |
| Embodiment 2-4 | Polyethylene | 130 | Styrene-butadiene rubber | Polyacrylate | 35 | 35 | 1 | 1 | 100 | 92 | 10 | 86.0 |
| Embodiment 2-5 | Polyethylene | 130 | Styrene-butadiene rubber | Polyacrylate | 24.5 | 35 | 0.7 | 1 | 100 | 93 | 10 | 86.5 |
| Embodiment 2-6 | Polyethylene | 130 | Styrene-butadiene rubber | Polyacrylate | 10.5 | 35 | 0.3 | 1 | 80 | 95 | 18 | 69.5 |
| Embodiment 2-7 | Polyethylene | 130 | Styrene-butadiene rubber | Polyacrylate | 40 | 40 | 1 | 0.1 | 100 | 70 | 3 | 82.0 |
| Embodiment 2-8 | Polyethylene | 130 | Styrene-butadiene rubber | Polyacrylate | 40 | 40 | 1 | 0.2 | 100 | 74 | 4 | 83.0 |
| Embodiment 2-9 | Polyethylene | 130 | Styrene-butadiene rubber | Polyacrylate | 40 | 40 | 1 | 0.5 | 100 | 80 | 6 | 84.0 |
| Embodiment 2-10 | Polyethylene | 130 | Styrene-butadiene rubber | Polyacrylate | 40 | 40 | 1 | 2 | 100 | 91 | 9 | 86.5 |
| Embodiment 2-11 | Polyethylene | 130 | Styrene-butadiene rubber | Polyacrylate | 40 | 40 | 1 | 3 | 80 | 88 | 12 | 72.0 |
| Embodiment 2-12 | Polyethylene | 110 | Styrene-butadiene rubber | Polyacrylate | 40 | 40 | 1 | 1 | 100 | 86 | 6 | 87.0 |

| Serial number | Material of base film | Pore closing temperature | Binder | Material of bonding layer | J | K | J/K | H | Thermal safety pass rate % | High-temperature cycle capacity retention rate % | High-temperature storage expansion rate % | Overall performance |
|---|---|---|---|---|---|---|---|---|---|---|---|---|
| Embodiment 2-13 | Polyethylene | 120 | Styrene-butadiene rubber | Polyacrylate | 40 | 40 | 1 | 1 | 100 | 88 | 5 | 89.0 |
| Embodiment 2-14 | Polyethylene | 140 | Styrene-butadiene rubber | Polyacrylate | 40 | 40 | 1 | 1 | 95 | 90 | 4 | 88.5 |
| Embodiment 2-15 | Polypropylene | 130 | Styrene-butadiene rubber | Polyacrylate | 40 | 40 | 1 | 1 | 100 | 91 | 5 | 90.5 |
| Embodiment 2-16 | Polyethylene | 130 | Polyvinylidene fluoride | Polyacrylate | 40 | 40 | 1 | 1 | 100 | 90 | 4 | 91.0 |
| Embodiment 2-17 | Polyethylene | 130 | Polyacrylic acid | Polyacrylate | 40 | 40 | 1 | 1 | 100 | 87 | 8 | 85.5 |
| Embodiment 2-18 | Polyethylene | 130 | Polyacrylate | Polyacrylate | 40 | 40 | 1 | 1 | 100 | 86 | 7 | 86.0 |
| Embodiment 2-19 | Polyethylene | 130 | Styrene-butadiene rubber | Polyvinylidene fluoride | 40 | 40 | 1 | 1 | 100 | 90 | 5 | 90.0 |
| Embodiment 2-20 | Polyethylene | 130 | Styrene-butadiene rubber | Polyacrylic acid | 40 | 40 | 1 | 1 | 100 | 91 | 6 | 89.5 |
| Embodiment 2-21 | Polyethylene | 130 | Styrene-buta-diene rubber | Styrene-buta-diene rubber | 40 | 40 | 1 | 1 | 100 | 89 | 6 | 88.5 |
| Embodiment 2-22 | Polyethylene | 130 | Styrene-butadiene rubber | Polyacrylate | 55 | 25 | 2.2 | 1 | 100 | 70 | 15 | 70.0 |
| Embodiment 2-23 | Polyethylene | 130 | Styrene-butadiene rubber | Polyacrylate | 52 | 40 | 1.3 | 1 | 100 | 88 | 7 | 87.0 |
| Embodiment 2-24 | Polyethylene | 130 | Styrene-butadiene rubber | Polyacrylate | 57.5 | 25 | 2.3 | 1 | 90 | 67 | 13 | 65.5 |
| Embodiment 2-25 | Polyethylene | 130 | Styrene-butadiene rubber | Polyacrylate | 20 | 40 | 0.5 | 1 | 75 | 90 | 11 | 71.5 |

14

(continued)

| Serial number | Material of base film | Pore closing temperature | Binder | Material of bonding layer | J | K | J/K | H | Thermal safety pass rate % | High-temperature cycle capacity retention rate % | High-temperature storage expansion rate % | Overall performance |
|---|---|---|---|---|---|---|---|---|---|---|---|---|
| Embodiment 2-26 | Polyethylene | 130 | Styrene-butadiene rubber | Polyacrylate | 15 | 20 | 0.75 | 1 | 85 | 80 | 9 | 73.5 |
| Embodiment 2-27 | Polyethylene | 100 | Styrene-butadiene rubber | Polyacrylate | 40 | 40 | 1 | 1 | 100 | 50 | 5 | 70.0 |
| Embodiment 2-28 | Polyethylene | 130 | Styrene-butadiene rubber | Polyacrylate | 19.5 | 65 | 0.3 | 1 | 100 | 74 | 13 | 74.0 |
| Embodiment 2-29 | Polyethylene | 130 | Styrene-butadiene rubber | Polyacrylate | 40 | 40 | 1 | 6 | 100 | 63 | 13 | 68.5 |
| Embodiment 2-30 | Polyethylene | 130 | Styrene-butadiene rubber | Polyacrylate | 8 | 15 | 0.5 | 1 | 80 | 75 | 17.5 | 60.0 |
| Embodiment 2-31 | Polyethylene | 130 | Styrene-butadiene rubber | Polyacrylate | 13 | 18 | 0.7 | 1 | 85 | 77 | 10 | 71.0 |
| Embodiment 2-32 | Polyethylene | 130 | Styrene-butadiene rubber | Polyacrylate | 35 | 70 | 0.5 | 1 | 95 | 71 | 13 | 70.0 |

*In the above table, based on the mass of the first coating, J represents a value of the mass percent J% of nitrogen, K represents a value of the mass percent K% of carbon, and H represents a value of the thickness H $\mu$m of the bonding layer. Overall performance = 0.5 * (thermal safety pass rate + high-temperature cycle capacity retention rate) - high-temperature storage expansion rate %, where the values of the high-temperature cycle capacity retention rate and the high-temperature storage expansion rate % are integers, and the score value of the overall performance is taken to one decimal place.

As can be seen from Table 2, the lithium-ion battery prepared from the embodiment of this application, when the value of the mass percent J% of nitrogen in the first coating is adjusted and controlled to satisfy $10.5 \leq J \leq 55$, and the ratio of the value of the mass percent J% of nitrogen to the value of the mass percent K% of carbon is adjusted and controlled to satisfy $0.3 \leq J / K \leq 2.2$, the thermal safety and high-temperature cycle performance of the secondary battery can further be improved, and the high-temperature storage performance is also improved. Especially, by adjusting and controlling $0.7 \leq J / K \leq 1.8$, $15 \leq J \leq 55$ and $20 \leq K \leq 65$, the thermal safety and high-temperature cycle performance of the secondary battery can further be improved, and the high-temperature storage performance is also improved.

Particularly, in the lithium-ion battery prepared according to the embodiments of this application, when the value of the thickness H $\mu$m of the bonding layer is adjusted and controlled to satisfy $0.1 \leq H \leq 3$, the thermal safety and high-temperature cycle performance of the secondary battery can further be improved, and the high-temperature storage performance is also improved.

The foregoing descriptions are merely exemplary embodiments of this application, but are not intended to limit this application. Any modifications, equivalent substitutions, and improvements made without departing from the principles of this application still fall within the protection scope of this application.

**Claims**

1.   A separator, comprising a base film and a first coating disposed on a surface of the base film, **characterized in that**, the first coating comprises an organic cyanide with a first functional group; the first functional group comprises at least one of a cyano group, an isocyano group, an isocyanate group, or a melamine derivative; and
based on a volume of the first coating, the first functional group has a molar concentration of M fmol/$\mu$m$^3$, $0.1 \leq M \leq 30$.

2.   The separator according to claim 1, **characterized in that** $1 \leq M \leq 10$.

3.   The separator according to claim 1 or 2, **characterized in that** the organic cyanide comprises at least one of polyacrylonitrile, acrylonitrile-butadiene rubber, 1,3,5-triazine-2,4,6-triamine, melamine cyanurate, or melamine trithiocyanurate.

4.   The separator according to claim 1 or 2, **characterized in that** the first coating comprises nitrogen and carbon; based on a mass of the first coating, a mass percentage of nitrogen is J%, and a mass percentage of carbon is K%; wherein $0.3 \leq J / K \leq 2.2$, and/or,

$$10.5 \leq J \leq 55.$$

5.   The separator according to claim 4, **characterized in that** the first coating satisfies at least one of the following conditions:

(1)

$$0.7 \leq J / K \leq 1.8;$$

(2)

$$15 \leq J \leq 55;$$

or
(3)

$$20 \leq K \leq 65.$$

6. The separator according to claim 1 or 2, **characterized in that** a material of the base film is at least one selected from polyethylene or polypropylene; and/or,

> a pore closing temperature of the separator is 120 °C to 140 °C; and/or,
> the first coating further comprises a binder, the binder comprising at least one of polyacrylic acid, polyacrylate, lithium polyacrylate, polyvinylidene fluoride, styrene-butadiene rubber, polyacrylamide, or sodium carboxymethyl cellulose.

7. The separator according to claim 1 or 2, **characterized in that** the separator further comprises a bonding layer, the bonding layer is coated on the surface of the first coating, and a thickness of the bonding layer is H $\mu$m, $0.1 \leq H \leq 3$.

8. The separator according to claim 7, **characterized in that** $0.2 \leq H \leq 2$; and/or,
a material of the bonding layer comprises at least one of styrene-butadiene rubber, polyacrylic acid, polyacrylate, lithium polyacrylate, polymethyl methacrylate, polyacrylonitrile, or polyvinylidene difluoride.

9. A secondary battery, comprising a positive electrode plate, an electrolyte solution, and the separator according to any one of claims 1 to 8;

> the surface of the base film is a surface facing the positive electrode plate;
> the positive electrode plate comprises a positive current collector and a positive electrode material layer disposed on at least one surface of the positive current collector, the positive electrode material layer comprising a positive active material, a delithiation capacity of the positive active material is P, $0.5 \leq P \leq 0.9$.

10. The secondary battery according to claim 9, **characterized in that** $0.6 \leq P \leq 0.8$.

11. The secondary battery according to claim 9 or 10, **characterized in that** the positive active material comprises at least one of lithium cobalt oxide, a ternary positive electrode material, lithium iron phosphate, or a lithium-rich manganese based material.

12. The secondary battery according to claim 9 or 10, **characterized in that** the electrolyte solution comprises fluoroethylene carbonate; and based on a total mass of the electrolyte solution, a mass percentage of the fluoroethylene carbonate is N%, $2 \leq N \leq 12$.

13. An electronic device, **characterized in that** the electronic device comprises the secondary battery according to any one of claims 9 to 12.

## EUROPEAN SEARCH REPORT

**Application Number**

EP 25 19 7970

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 509 137 B1 (SHINETSU CHEMICAL CO [JP]; MATSUGAKI CHEMICAL IND CO LTD [JP]) 13 November 2013 (2013-11-13) * claims 1-6 * * paragraphs [0004], [0054], [0066], [0067] * * table 1 * | 1-13 | INV. H01M50/414 H01M50/417 H01M50/457 H01M50/489 H01M50/491 H01M10/0525 |
| A | EP 3 627 587 A1 (SAMSUNG SDI CO LTD [KR]) 25 March 2020 (2020-03-25) * claims 1-16 * | 1-13 | |
| A | CN 117 693 837 A (NINGDE AMPEREX TECHNOLOGY LTD) 12 March 2024 (2024-03-12) * claims 1-13 * | 1-13 | |

TECHNICAL FIELDS SEARCHED (IPC)

H01M

The present search report has been drawn up for all claims

| Place of search | Date of completion of the search | Examiner |
|---|---|---|
| The Hague | 19 January 2026 | Reich, Claus |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 7970

This annex lists the patent family members relating to the patent documents cited in the above-mentioned European search report.
The members are as contained in the European Patent Office EDP file on
The European Patent Office is in no way liable for these particulars which are merely given for the purpose of information.

19-01-2026

| Patent document cited in search report | | Publication date | Patent family member(s) | | Publication date |
|---|---|---|---|---|---|
| EP 2509137 | B1 | 13-11-2013 | CN | 102738424 A | 17-10-2012 |
| | | | EP | 2509137 A1 | 10-10-2012 |
| | | | JP | 5787817 B2 | 30-09-2015 |
| | | | JP | 2012227134 A | 15-11-2012 |
| | | | KR | 20120113675 A | 15-10-2012 |
| | | | TW | 201302951 A | 16-01-2013 |
| | | | US | 2012258348 A1 | 11-10-2012 |
| | | | US | 2015171392 A1 | 18-06-2015 |
| EP 3627587 | A1 | 25-03-2020 | CN | 107394087 A | 24-11-2017 |
| | | | CN | 108963148 A | 07-12-2018 |
| | | | CN | 110651381 A | 03-01-2020 |
| | | | EP | 3246969 A1 | 22-11-2017 |
| | | | EP | 3627587 A1 | 25-03-2020 |
| | | | JP | 6802392 B2 | 16-12-2020 |
| | | | JP | 7097674 B2 | 08-07-2022 |
| | | | JP | 2017208343 A | 24-11-2017 |
| | | | JP | 2020521278 A | 16-07-2020 |
| | | | KR | 20170129637 A | 27-11-2017 |
| | | | KR | 20170129638 A | 27-11-2017 |
| | | | KR | 20170129639 A | 27-11-2017 |
| | | | KR | 20170129640 A | 27-11-2017 |
| | | | KR | 20170129641 A | 27-11-2017 |
| | | | KR | 20170129642 A | 27-11-2017 |
| | | | KR | 20170129643 A | 27-11-2017 |
| | | | KR | 20170129644 A | 27-11-2017 |
| | | | KR | 20170129645 A | 27-11-2017 |
| | | | US | 2017338461 A1 | 23-11-2017 |
| | | | US | 2018337381 A1 | 22-11-2018 |
| | | | US | 2020119323 A1 | 16-04-2020 |
| | | | WO | 2018212566 A1 | 22-11-2018 |
| CN 117693837 | A | 12-03-2024 | CN | 117693837 A | 12-03-2024 |
| | | | WO | 2024197943 A1 | 03-10-2024 |

EPO FORM P0459

For more details about this annex : see Official Journal of the European Patent Office, No. 12/82